# EUROPÄISCHE PATENTANMELDUNG

(11) **EP 1 240 972 A1**
(43) Veröffentlichungstag der Anmeldung: **18.09.2002**
(21) Anmeldenummer: 01130799.8
(22) Anmeldetag: 24.12.2001
(51) Int. Cl.: B23K 26/36, B41M 5/26, E04B 1/78

(54) **Verfahren zur Herstellung eines Dämmstoffes**

(30) Priorität: 17.01.2001 DE 10101786; 23.01.2001 DE 10102853
(71) Anmelder: Deutsche Rockwool Mineralwoll GmbH & Co. OHG, 45966 Gladbeck (DE)
(72) Erfinder: Kesting, Peter, Dipl.-Ing., 46244 Bottrop-Kirchhellen (DE); Paulitschke, Werner, Dr. rer. nat., 41564 Kaarst (DE); Klose, Gerd-Rüdiger, Dr.-Ing., 46286 Dorsten (DE)
(74) Vertreter: Wanischeck-Bergmann, Axel

(57) **Zusammenfassung**

Die Erfindung betrifft ein Verfahren zur Herstellung eines Dämmstoffes, insbesondere aus organischen und/oder anorganischen Fasern, beispielsweise aus mit oder ohne organischen und/oder anorganischen Bindemitteln versehenen Glas- und/oder Keramikfasern, und/oder aus Kunststoff-Hartschaum, wie beispielsweise expandiertem oder extrudiertem Polystyrol, Phenolharz, Polyurethanschaum oder Polyisocyanoratschaum und/oder aus Porenbeton, Mineralschaum, Schaumglas, Sinterglas, aufgeschäumten Wasserglas oder ähnlichen sich partiell verfärbenden und/oder aufblähenden Schmelzen. Um ein Verfahren zu schaffen, bei dem in einfacher und kostengünstiger Weise materialabhebende und gegebenenfalls kennzeichnende Materialbearbeitungen möglich sind, ist vorgesehen, dass der Dämmstoff durch Wärmeenergie in seiner Farbe und/oder Gestalt veränderbar ist, wobei der Dämmstoff vorzugsweise im Bereich einer seiner Seitenflächen mit zumindest einem Laserstrahl beaufschlagt wird, um einen Materialabtrag, insbesondere in Form zumindest einer Ausnehmung, vorzugsweise in Form von Schlitzen in die Fläche des Dämmstoffs einzubringen.

## Beschreibung

Die Erfindung betrifft ein Verfahren zur Herstellung eines Dämmstoffes, insbesondere aus organischen und/oder anorganischen Fasern, beispielsweise aus mit oder ohne organischen und/oder anorganischen Bindemitteln versehenen Glasund/oder Keramikfasern, und/oder aus Kunststoff-Hartschaum, wie beispielsweise expandiertem oder extrudiertem Polystyrol, Phenolharz, Polyurethanschaum oder Polyisocyanoratschaum, und/oder aus Porenbeton, Mineralschaum, Schaumglas, Sinterglas, aufgeschäumten Wasserglas oder ähnlichen sich partiell verfärbenden und/oder aufblähenden Schmelzen, wobei der Dämmstoff durch Wärmeenergie in seiner Farbe und/oder Gestalt veränderbar ist.

Aus dem Stand der Technik ist die Herstellung von Dämmstoffen bekannt, die beispielsweise bahnen- oder plattenförmig ausgebildet sein können, bei der eine Schmelze aus Glas oder Gestein hergestellt und einem Zerfaserungsgerät zugeführt wird. In dem Zerfaserungsgerät wird die Schmelze in mikrofeine Fasern zerfasert, die anschließend mit einem Bindemittel und gegebenenfalls weiteren Imprägnierungsmitteln benetzt werden. Die derart vorbereiteten Mineralfasern weisen in diesem Zustand eine bestimmte Temperatur auf. Aufgrund ihrer Temperatur und insbesondere ihrer Bindemitteln neigen die Mineralfasern dazu aneinander zu haften. Die Mineralfasern werden daher unmittelbar nach ihrer Benetzung mit zumindest Bindemitteln auf einer Fördereinrichtung, in der Regel ein Förderband abgelegt. Die derart gebildete Mineralfaserbahn kann dann in unterschiedlichen Weisen weiterbearbeitet werden. Beispielsweise kann die Mineralfaserbahn nach Erreichen einer bestimmten Materialstärke aufgependelt werden. In der Regel durchläuft die Mineralfaserbahn Kompressionseinrichtungen, Schneideinrichtungen zur Seitenrandbesäumung sowie zumindest einen Härteofen, um das Bindemitteln auszuhärten.

Nach Verlassen des Härteofens wird die bahnenförmige Mineralfaserbahn einer Wickelstation zugeführt bzw. alternativ in einzelne Platten geschnitten, die dann einer Verpackungseinrichtung zugeführt und zu handelsüblichen Verpackungseinheiten verpackt werden.

Aus dem Stand der Technik ist ferner bekannt, dass der bahnenförmige Dämmstoff beispielsweise die Mineralfaserplatten, Hartschaumplatten oder Porenbetonplatten, mit Markierungen versehen werden. Diese Markierungen werden in der Regel als Farbmarkierungen mit Hilfe von Schablonen und Farbspritztechnik oder mit Tintenstrahldruckern aufgebracht. Farbmarkierungen haben aber den wesentlichen Nachteil, dass sie die Baustoffklasse, d.h. die Brennbarkeit der Produkte beeinflussen. Um diese Beeinflussung zu vermeiden, setzt man insbesondere bei Mineralwolledämmstoffen, die ein organisches Bindemittel enthalten, elektrischoder gasbeheizte Markierungswalzen ein, auf deren Umfang Markierungsbilder und -texte angebracht sind. Diese Markierungswalzen werden periodisch oder konstant auf die Mineralfaserbahn aufgebracht, so dass die beheizten Markierungswalzen aufgrund der Temperatur eine Verfärbung des Bindemittels im Mineralfaserprodukt hervorrufen. Dieser Vorgang kann diskontinuierlich, wie beim Stempeln oder kontinuierlich erfolgen, so dass man einen fortlaufenden Schriftzug auf dem Dämmstoff in der Gestalt erzeugen kann, dass das Bindemittel durch die heißen Zonen an der Oberfläche des Dämmstoffs verfärbt wird, und somit der Schriftzug bzw. das Bildzeichen auf der Oberfläche zu sehen ist.

Beispielsweise ist aus der nicht vorveröffentlichten deutschen Patentanmeldung mit dem amtlichen Aktenzeichen 100 17 269.5-26 ein Verfahren zur Herstellung eines Dämmstoffes bekannt, bei dem mittels eines Laserstrahls Markierungen in eine Oberfläche des Dämmstoffes eingebracht werden. Hierzu ist es erforderlich, dass den Bindemitteln hitzeaktive Bestandteile, vorzugsweise Pigmente beigefügt werden, die durch den Laserstrahl hinsichtlich ihrer Färbung verändert werden können. Aus dieser Anmeldung ist es ebenfalls bekannt, eine Dämmstoffbahn mit einem Laserstrahl in Abschnitte, insbesondere Platten aufzuteilen. Demzufolge dient der Laserstrahl hierzu zusätzlich dem Schneiden von Dämmstoffbahnen.

Um eine Dämmstoffbahn in einzelne Plattenelemente aufzuteilen ist es bekannt, im Bereich einer Produktionslinie entsprechende Sägeinrichtungen, beispielsweise Pendel-, Kreis- und Bandsägen vorzusehen, die in Abhängigkeit des zu erzeugenden Produktes zum Einsatz gelangen. Mit derartigen Sägen können aber nur geradlinige Schnitte ausgeführt werden.

Die üblicherweise verwendeten Sägen wirken mechanisch auf den Dämmstoff, so dass insbesondere bei Dämmstoffbahnen mit geringem Bindemittelgehalt das Ausarbeiten von schmalen Ausnehmungen, insbesondere in den Seitenflächen nicht mit der notwendigen Genauigkeit ausgeführt werden kann. Bei jeder mechanischen Bearbeitung derartiger Dämmstoffe kommt es nämlich zu einem Ausreißen von Faserbestandteilen, so dass geradlinige Begrenzungen von Ausnehmungen oder dergleichen in derartigen Dämmstoffen nicht oder nur mittels sehr kostspieliger Verfahrenstechnologie eingebracht werden können.

Ausgehend von diesem Stand der Technik liegt der Erfindung die **Aufgabe** zugrunde, ein Verfahren zu schaffen, bei dem in einfacher und kostengünstiger Weise materialabhebende und gegebenenfalls kennzeichnende Materialbearbeitungen möglich sind.

Die **Lösung** dieser Aufgabenstellung sieht vor, dass der Dämmstoff vorzugsweise im Bereich einer seiner Seitenflächen mit zumindest einem Laserstrahl beaufschlagt wird, um einen Materialabtrag, insbesondere in Form zumindest einer Ausnehmung, vorzugsweise in Form von Schlitzen in die Fläche des Dämmstoffs einzubringen.

Demzufolge zeichnet sich das erfindungsgemäße Verfahren dadurch aus, dass anstelle der mechanischen Materialbearbeitungen nunmehr ein Materialabtrag mittels eines Laserstrahls in der Oberfläche des Dämmstoffs ausgeführt wird. Der Laserstrahl bietet hierbei den wesentlichen Vorteil, dass er in einfacher Weise steuerbar, insbesondere lenkbar ist und auf die tatsächlichen Gegebenheiten des Dämmstoffs eingestellt werden kann. Bei dem erfindungsgemäßen Verfahren können sowohl Faserdämmstoffe aus organischen Fasern bzw. mit organischen Bindemitteln gebundene anorganische Fasern, beispielsweise Glasfasern oder organische Substanzen enthaltene Dämmstoffe, sowie Dämmstoffe aus Hartschaum bearbeitet werden, bei denen die Materialbearbeitung durch partielles Sintern bzw. Schmelzen von Vertiefungen in der Oberfläche ausgeführt wird. Insbesondere sind mit dem erfindungsgemäßen Verfahren sämtliche im Oberbegriff des Anspruchs 1 genannten Dämmstoffe bearbeitbar.

Bei einem kontinuierlichen Herstellungsprozeß wird der Dämmstoff bahnenförmig dem Laserstrahl zugeführt, um die kontinuierliche Herstellung des Dämmstoffs beibehalten zu können. Es besteht aber auch die Möglichkeit, die Laserstrahlbearbeitung bei bereits hergestellten Dämmstoffformelementen, wie beispielsweise Platten, Rohrschalen, Segmenten oder sonstigen Formkörpern durchzuführen, wobei hier eine manuelle oder automatische Zuführung derartiger Formteile in die Laserstrahlbearbeitungseinrichtung möglich ist. Eine kontinuierliche Bearbeitung des Dämmstoffs erfolgt in der Regel nicht. Vielmehr handelt es sich hierbei um eine Einzelbearbeitung der einzelnen Formteile, wie beispielsweise Rohrschalen, Platten oder dergleichen.

Nach einem weiteren Merkmal der Erfindung ist vorgesehen, dass mit dem Laserstrahl der Dämmstoff, insbesondere die Bahn in Abschnitte, insbesondere Platten aufgeteilt wird. Durch diese Ausgestaltung besteht die Möglichkeit, dass bei der Dämmstoffbahn nicht nur Materialbearbeitungen einer Oberfläche vorgenommen werden, sondern dass mit der gleichen Einrichtung auch ein Schneiden der Dämmstoffbahn in Platten möglich ist. Es werden hierdurch hohe Investitionskosten bei der Gestaltung von Produktionslinien eingespart. Darüber hinaus hat es sich als vorteilhaft erwiesen, dass die Wartung eines Laserstrahls aufgrund seiner im Vergleich zu herkömmlichen Komponenten geringeren Anzahl von mechanischen Elementen wesentlich wartungsfreundlicher ist.

Bei besonderen Anwendungen von Dämmstoffplatten, insbesondere von Mineralwolle-Dämmstoffplatten kann es erforderlich sein, in die Seitenflächen dieser Dämmstoffplatten durchlaufend oder abschnittsweise Schlitze zum Einlegen oder Einklemmen von Befestigungselementen oder Federn, beispielsweise entsprechend dem Prinzip von Nut- und Feder-Verbindungen einzubringen. Diese Schlitze können auch dazu dienen, die Dämmstoffplatten über beispielsweise lotrecht ausgerichtete, U-förmig ausgebildete Metallständer von Montagewänden oder dergleichen zu stülpen, die Bestandteil von sogenannten Kassetten-Systemen sind.

Derartige Schlitze können umlaufend, auf parallelen Seitenflächen oder nur auf einer Seitenfläche in jeder Ausgestaltung angeordnet werden. Neben der Anordnung von einem einzelnen Schlitz ermöglicht die vorliegende Erfindung die Anordnung von zwei oder mehreren parallel verlaufenden Schlitzen in einer Seitenfläche, die problemlos hinsichtlich ihrer Breite und Tiefe variiert werden können. Eine derartige Vorgehensweise ist mit den bisher bekannten mechanischen Bearbeitungsmethoden, insbesondere bei dünnen Dämmstoffplatten nicht möglich, da hier eine Ausreißen von Dämmstoffasern nicht die notwendige Genauigkeit entsprechender Schlitze ermöglicht.

Um druckausgleichende, beispielsweise im Querschnitt U-förmige Profile in die Oberflächen von Dämmstoffplatten für die Dach- oder die Fassadendämmung einbringen zu können, werden entsprechende Ausnehmungen bzw. Schlitze mit vorbestimmter Tiefe und einem vorbestimmten Abstand zueinander in Dämmstoffplatten eingebracht. Anstelle von Schlitzen können auch flächige Vertiefungen oder Löcher in den Dämmstoff mittels des erfindungsgemäßen Verfahrens eingebracht werden, wobei entsprechende Löcher beispielsweise der Aufnahme von Dämmstoffhaltern bei der Fassadendämmung dienen können.

Somit ist es bei dem erfindungsgemäßen Verfahren insbesondere vorteilhaft, dass mit Hilfe des Laserstrahls beliebig geformte Flanken und Ausnehmungen in den Dämmstoff eingebracht werden können. Bei der Bearbeitung von Dämmstoffen aus Mineralfasern besteht durch die Verwendung des Laserstrahls insbesondere der Vorteil, dass durch ein partielles Aufschmelzen des Dämmstoffs kein Faserstaub freigesetzt wird, wie es beispielsweise bei einer mechanischen Bearbeitung derartiger Dämmstoffe üblich ist. Bei der erfindungsgemäßen Bearbeitung werden darüber hinaus die Seitenbereiche der Ausnehmungen stark verdichtet, was die Kraftübertragung zwischen dort angeordneten Haltemitteln und dem Dämmstoff wesentlich verbessert.

Durch das partielle Aufschmelzen der Mineralfasern im Bereich des Laserstrahls können darüber hinaus insbesondere bei bindemittelarmen und/oder Dämmstoffen mit geringer Rohdichte deutlich sichtbare Markierungen eingebracht werden, die beispielsweise als Schneidhilfe dienen.

Je nach aufgebrachter Energie werden die Mineralfasern schlagartig bis zu ihrer Rekristallisation erwärmt, woraufhin sie sich in einfacher Weise entfernen lassen. Durch eine Verdichtung der Fasern können sich aber bereits bei diesem Verfahrensschritt Vertiefungen ausbilden. Es ist dann nicht erforderlich, das Verfahren bis zum Aufschmelzen der Fasern weiterzuführen.

Ein den Laserstrahl erzeugender Laser wird vorzugsweise in Längs-, Querund/oder Abstandsrichtung sowie gegebenenfalls in seiner Winkelstellung relativ zur Oberfläche des Dämmstoffs bewegt. Der Laserstrahl wird über einen in den drei Hauptachsen drehbaren Spiegel und ein Linsensystem auf die Dämmstoffoberfläche gelenkt. Der Antrieb des Spiegels erfolgt über elektrisch angetriebene Servomotoren, die ihre Antriebssignale von einem Steuergerät erhalten. Das Steuergerät selbst ist mit einer elektronischen Datenverarbeitungsanlage (Rechner) verbunden, in der Daten für bestimmte Markierungsanordnungen und/oder -ausgestaltungen auf den Dämmstoffen gespeichert sind. Diese Daten dienen der Steuerung des Laserstrahls hinsichtlich seiner Bewegungen und/oder seiner Intensität. Alternativ kann vorgesehen sein, dass die den Laserstrahl erzeugende Vorrichtung mit den nachgeschalteten optischen Einrichtungen in den drei Raumachsen bewegbar ist. Durch die Vielzahl der Freiheitsgerade des Laserstrahls können Materialbearbeitungen und Schnitte in unterschiedlichster Form eingebracht werden. Darüber hinaus besteht der Vorteil, dass beispielsweise sämtliche Buchstaben und Zahlen sowie Pictogramme rechnergesteuert und variabel als Markierungen ergänzend eingebracht werden können. Weiterhin besteht der Vorteil, dass Mineralfaserplatten hergestellt werden können, die beispielsweise an zwei gegenüberliegenden Seiten einen Randverlauf aufweisen, der von einer geradlinigen Begrenzung abweicht. Es können somit beispielsweise Mineralfaserplatten mit bestimmten halbkreisförmigen Ausnehmungen entsprechend von Kundenanforderungen hergestellt werden.

Der Laserstrahl wird von einem Festkörper- oder Gaslasergerät vorzugsweise mit Hilfe eines CO₂-Lasers erzeugt.

Die Lichtleistung des Laserstrahls wird in Abhängigkeit von der Größe und der Intensität der erforderlichen Materialbearbeitung über die optischen Einrichtungen eingestellt. Vorzugsweise wird der Laserstrahl mit unterschiedlicher Geschwindigkeit relativ zur Oberfläche des Dämmstoffs bewegt. Die Relativgeschwindigkeit liegt beispielsweise bei ca. 5m/s.

Während des Aufteilens der Bahn in Abschnitte wird der Laserstrahl mit einer Geschwindigkeit in Förderrichtung bewegt, die mit der Fördergeschwindigkeit der Bahn übereinstimmt, um beispielsweise einen geradlinig begrenzten Schnitt ausführen zu können.

Schließlich ist nach einem weiteren Merkmal der Erfindung vorgesehen, dass die Bewegungen und/oder die Leistung des Laserstrahls über eine Rechneranlage gesteuert werden, deren Eingangsdaten insbesondere der Produktionssteuerung entnommen werden. Eine derartige Verknüpfung der Produktionssteuerung mit der Markierungssteuerung bzw. Schnittsteuerung hat den Vorteil, dass entsprechend dem Kundenwunsch kommissionierte Ware in einfacher und zuverlässiger Weise hergestellt werden kann.

Eine einem Härteofen entnommene Mineralwollebahn bestimmter Dicke und bestimmter Rohdichte wird beim Ausführungsbeispiel der Erfindung einer Bearbeitungs- und Schneidvorrichtung zugeführt. Die Bearbeitungs- und Schneidvorrichtung weist einen CO₂-Laser mit variabler Leistung bis zu 1500 Watt und einer Wellenlänge von ca. 1 bis 12 µm, insbesondere von 9 bis 12 µm auf. Der Laserstrahl wird über einen Spiegel auf eine Seitenfläche der Mineralwollebahn gelenkt. Alternativ kann vorgesehen sein, dass der den Laserstrahl erzeugende Laser oberhalb einer Transporteinrichtung, auf der der Mineralwollebahn gefördert wird, auf einem motorbetriebenen Doppelkreuzschlitten montiert ist, so dass er in allen Achsen verfahrbar ist. Darüber hinaus ist der Laser innerhalb des Doppelkreuzschlittens schwenkbeweglich gelagert, so dass ein vom Laser erzeugter Laserstrahl unter einem bestimmten Winkel, abweichend von der Lotrechten auf die Seitenfläche der Mineralwollebahn aufgebracht werden kann.

Weiterhin kann der Laserstrahl mit Hilfe von elektronisch justierbaren, optischen Einrichtungen wie Linsen, Linsensystemen, optisch wirksamen Gittern oder Spiegeln in der gewünschten Weise abgelenkt und somit über die zu bearbeitenden Seitenfläche geführt werden. Durch diese optischen Hilfseinrichtungen, sowie durch Variation des Abstandes derselben zu der zu bearbeitenden Seitenfläche, durch Veränderung des Neigungswinkels und der Intensität des Laserstrahls können die Genauigkeit, Breite und Intensität des Materialabtrags verändert werden.

Bei einer Anordnung des Lasers auf einem Doppelkreuzschlitten wird der Laserstrahl in einem ersten Schritt derart eingestellt, dass er rechtwinklig auf die zu bearbeitende Seitenfläche der Mineralwollebahn auftrifft. Der Doppelkreuzschlitten ist hierbei mit einem Rechner verbunden, über den die Bewegungen des Doppelkreuzschlittens gesteuert werden. Die Daten zur Steuerung der Bewegung des Doppelkreuzschlittens erhält der Rechner aus einer Auftragsverwaltung, in die die Art und die Anzahl der herzustellenden Mineralwolleplatten eingegeben ist.

Die Mineralwollebahn gelangt in den Bereich der Bearbeitungs- und Schneidvorrichtung, wobei die Bearbeitungs- und Schneidvorrichtung in ihrer maximalen Stellung in Richtung der auflaufenden Mineralwollebahn steht. Unmittelbar nach Erreichen der Bearbeitungs- und Schneidvorrichtung beginnt diese Material aus der Seitenfläche in Form eines Schlitzes aus der Mineralwollebahn abzutragen. Hierbei bewegt sich die Bearbeitungs- und Schneidvorrichtung in Förderrichtung der Mineralwollebahn. Sobald der Materialabtrag vollständig erfolgt ist, bewegt sich die Markierungs- und Schneidvorrichtung in einen vorbestimmten Schneidbereich, um die zuvor bearbeitete Mineralwollebahn um eine Plattenlänge zu verkürzen. Anschließend wird der nachfolgende Abschnitt der Mineralwollebahn bearbeitet und nach Fertigstellung des Materialabtrags abgelängt.

Die Verfahrgeschwindigkeit des Lasers ist hierbei so gewählt, dass sie wesentlich größer als die Fördergeschwindigkeit ist. Darüber hinaus wird die Leistung des Lasers in Abhängigkeit der Bearbeitungen bzw. des Schneidprozesses automatisch eingestellt. Während des Materialabtrags wird beispielsweise eine Leistung von 250 mW eingestellt, um einen Materialabtrag in einer vorbestimmten Tiefe auszuführen, wohingegen der Schneidvorgang bei einer Leistung von 1500 W durchgeführt wird.

## Patentansprüche

1. Verfahren zur Herstellung eines Dämmstoffes, insbesondere aus organischen und/oder anorganischen Fasern, beispielsweise aus mit oder ohne organischen und/oder anorganischen Bindemitteln versehenen Glas- und/oder Keramikfasern, und/oder aus Kunststoff-Hartschaum, wie beispielsweise expandiertem oder extrudiertem Polystyrol, Phenolharz, Polyurethanschaum oder Polyisocyanoratschaum, und/oder aus Porenbeton, Mineralschaum, Schaumglas, Sinterglas, aufgeschäumten Wasserglas oder ähnlichen sich partiell verfärbenden und/oder aufblähenden Schmelzen, wobei der Dämmstoff durch Wärmeenergie in seiner Farbe und/oder Gestalt veränderbar ist, wobei der Dämmstoff vorzugsweise im Bereich einer seiner Seitenflächen mit zumindest einem Laserstrahl beaufschlagt wird, um einen Materialabtrag, insbesondere in Form zumindest einer Ausnehmung, vorzugsweise in Form von Schlitzen in die Fläche des Dämmstoffs einzubringen.

2. Verfahren nach Anspruch 1,
**dadurch gekennzeichnet,**
**dass** der Dämmstoff bahnenförmig dem Laserstrahl zugeführt wird.

3. Verfahren nach Anspruch 1 oder 2,
**dadurch gekennzeichnet,**
**dass** der Dämmstoff, insbesondere die Dämmstoffbahn mit dem Laserstrahl in Abschnitte, insbesondere Platten aufgeteilt wird.

4. Verfahren nach Anspruch 3,
**dadurch gekennzeichnet,**
**dass** der Dämmstoff als Stapel mehrerer Platten dem Laserstrahl zugeführt werden, die zumindest teilweise mit dem Laserstrahl gleich bearbeitet werden.

5. Verfahren nach Anspruch 3,
**dadurch gekennzeichnet,**
**dass** die Platten an ihren Seitenflächen umlaufend mit dem Laserstrahl beaufschlagt werden.

6. Verfahren nach Anspruch 1,
**dadurch gekennzeichnet,**
**dass** die Fasern des Dämmstoffs schlagartig erwärmt und vorzugsweise nach ihrer Rekristallisation zur Bildung einer Ausnehmung entfernt werden.

7. Verfahren nach Anspruch 1,
**dadurch gekennzeichnet,**
**dass** die Fasern des Dämmstoffs schlagartig erwärmt und vorzugsweise nach ihrer Rekristallisation zur Bildung einer Ausnehmung verdichtet werden.

8. Verfahren nach Anspruch 1,
**dadurch gekennzeichnet,**
**dass** der Materialabtrag als Markierung ausgebildet ist.

9. Verfahren nach Anspruch 1,
**dadurch gekennzeichnet,**
**dass** der Laserstrahl mittels elektronisch justierbarer, optischer Einrichtung in Längs-, Quer- und/oder Abstandsrichtung und/oder in seiner Winkelstellung relativ zur Oberfläche der Mineralfaserbahn bewegt wird.

10. Verfahren nach Anspruch 1,
**dadurch gekennzeichnet,**
**dass** der Laserstrahl in seiner Breite und/oder seiner Intensität verändert wird.

11. Verfahren nach Anspruch 1,
**dadurch gekennzeichnet,**
**dass** ein den Laserstrahl erzeugender Laser in Längs-, Quer- und/oder Abstandsrichtung sowie gegebenenfalls in seiner Winkelstellung relativ zur Oberfläche des Dämmstoffs bewegt wird.

12. Verfahren nach Anspruch 1,
**dadurch gekennzeichnet,**
**dass** der Laserstrahl mit einem Feststoff- oder Gaslaser, insbesondere einem CO₂-Laser erzeugt wird.

13. Verfahren nach Anspruch 1,
**dadurch gekennzeichnet,**
**dass** die Leistung des Laserstrahls in Abhängigkeit der Größe und Intensität des erforderlichen Materialabtrags eingestellt wird.

14. Verfahren nach Anspruch 1,
**dadurch gekennzeichnet,**
**dass** bei Dämmstoffen aus Hartschaum mit dem Laser Material durch partielles Sintern bzw. Schmelzen aus der Oberfläche abgetragen wird.
